# EUROPÄISCHE PATENTSCHRIFT

(11) **EP 2 278 185 B1**
(45) Veröffentlichungstag und Bekanntmachung des Hinweises auf die Patenterteilung: **11.09.2013**
(21) Anmeldenummer: 10007488.9
(22) Anmeldetag: 20.07.2010
(51) Int. Cl.: F16F 9/53, F16F 9/46

(54) **Dämpfereinrichtung für ein Zweirad**
Damping device for a bicycle
Dispositif d'amortissement pour un deux roues

(30) Priorität: 21.07.2009 DE 102009034298
(43) Veröffentlichungstag der Anmeldung: 26.01.2011
(73) Patentinhaber: DT Swiss AG, 2500 Biel/ Bienne 6 (CH)
(72) Erfinder: Battlogg, Stefan, 6771 St. Anton i.M. (AT); Pösel, Jürgen, 6700 Bludenz (AT); Eisensohn, Gernot, 6771 St. Anton i.M. (AT); Walthert, Martin, 3270 Aarberg (CH)
(74) Vertreter: Schütte, Hartmut

(56) Entgegenhaltungen:
- DE-A1- 19 820 570
- DE-T2- 69 821 799
- JP-A- 59 017 039
- US-B1- 6 471 018

## Beschreibung

Die vorliegende Erfindung betrifft eine Dämpfereinrichtung für ein Zweirad und insbesondere für ein Fahrrad, wie beispielsweise einen Hinterraddämpfer oder eine Federgabel. Ein solches Zweirad ist insbesondere muskelgetrieben, kann aber auch motorgetrieben sein oder als Fahrrad mit einem Hilfsantrieb ausgerüstet sein.

Im Stand der Technik sind verschiedenste Hinterraddämpfer und auch Federgabeln für Zweiräder bekannt geworden. Typischerweise umfasst eine Dämpfungseinheit für ein Hinterrad eines Zweirades wenigstens eine Feder, um auftretende Stöße abzufedern, sowie wenigstens einen Dämpfer, um die Federschwingung zu dämpfen.

Dämpfer für Zweiräder und insbesondere Fahrräder werden zumeist mit einem Dämpfungsfluid, wie beispielsweise Öl, betrieben. Zur Dämpfung wird das Dämpfungsfluid von einer Dämpfungskammer über ein Ventil gedrosselt zu einer zweiten Dämpfungskammer geleitet. Das Ventil kann auch federbeaufschlagt sein. Dabei kann das Ventil als Blende oder Drossel ausgebildet sein. Die Größe der Öffnung der Blende bestimmt die Stärke der Dämpfung. Dabei ist es bei der Anwendung an Fahrrädern gewünscht, die Stärke der Dämpfung einstellen zu können. Die optimale Dämpfung hängt beispielsweise von den Eigenschaften des Geländes ab. So wird bei Fahrten über eine Straße, über einen Waldweg oder direkt durch das Gelände jeweils eine unterschiedliche Dämpfungseinstellung optimal sein.

Zur Einstellung und Beeinflussung der Dämpfung sind elektrorheologische und magnetorheologische Fluide bekannt geworden, deren Eigenschaften durch Anlegen eines elektrischen oder magnetischen Feldes beeinflusst werden können. Magnetorheologische Fluide beispielsweise bestehen meist aus einer Suspension von kleinen, magnetisch polarisierbaren Partikeln, welche in einer Trägerflüssigkeit fein verteilt sind. Die meist aus Carbonyleisenpulver bestehenden polarisierbaren Partikel weisen typischerweise Durchmesser zwischen 0,1 und 50 Mikrometer auf und bilden unter Einfluss eines magnetischen Feldes kettenartige Strukturen, sodass die Viskosität des magnetorheologischen Fluids unter Einfluss eines Magnetfelds insbesondere senkrecht zu den Feldlinien des Magnetfelds erheblich zunimmt.

Bei Abschaltung des Magnetfelds nimmt die Viskosität nahezu schlagartig wieder ab. Untersuchungen haben gezeigt, dass die typische Reaktionszeit im Bereich weniger Millisekunden oder darunter beträgt. Somit eignen sich magnetorheologische Fluide zum Einsatz an Dämpfern von Fahrrädern.

Mit der US 6,471,018 B1 ist ein magnetorheologischer Dämpfer bekannt geworden, bei dem über einen Elektromagneten eine Strömungspassage zwischen der ersten und der zweiten Dämpferkammer mit einem Magnetfeld beaufschlagt wird, um die gewünschte Dämpfung einzustellen.

Ein Vorteil von Dämpfern mit magnetorheologischen Fluiden ist, dass über die Stärke des eingesetzten elektrischen oder magnetischen Feldes die Steigung der Dämpferkennlinie beeinflusst werden kann.

Mit der DE 698 21 799 T2 ist ein regelbares Ventil und ein Schwingungsdämpfer für ein Fahrrad bekannt geworden, wobei ein Permanentmagnet zur Erzeugung des magnetischen Feldes eingesetzt wird. Mechanische Einstellmittel dienen zum Einstellen der Stärke des magnetischen Feldes, welches auf den mit einem magnetorheologischen Fluid gefüllten Durchgangskanal einwirkt. Dabei wird zur Einstellung der Stärke des Magnetfeldes der Abstand des Magneten zum Durchgangskanal variiert. Mit zunehmendem Abstand reduziert sich die Feldstärke im Durchgangskanal. Über diese Maßnahme wird die Stärke des Magnetfeldes in dem Durchgangskanal, eingestellt und somit direkt die Stärke der Verkettung der einzelnen Partikel in dem magnetorheologischen Fluid beeinflusst.

In der DE 698 21 799 T2 wird weiterhin auch beschrieben, die Stärke des magnetischen Feldes in dem Durchgangskanal für die Druckstufe und für die Zugstufe unterschiedlich einzustellen.

Ein Dämpfer gemäß der DE 698 21 799 T2 funktioniert und weist sowohl in der Zugstufe als auch in der Druckstufe eine durch das Magnetfeld des Permanentmagneten eingestellte Dämpfung auf.

Nachteilig an dem System gemäß der DE 698 21 799 T2 ist allerdings, dass im Betrieb erst eine bestimmte Losbrechkraft überwunden werden muss, bis das magnetorheologische Fluid durch den Dämpfungskanal fließt, da das durch den Permanentmagneten erzeugte Magnetfeld eine bestimmte Verkettung der magnetorheologischen Partikel in dem Durchgangskanal bewirkt. Das bedeutet, dass bei kleineren Stößen keine Dämpfung auftritt, sondern eine Dämpfung erst bei Stößen erfolgt, deren Größe oberhalb der Losbrechkraft liegt. Das Ansprechverhalten der Dämpfung ist somit schlecht, denn nur starke Stöße werden gedämpft. Die Größe der Losbrechkraft kann über die Stärke des Magnetfeldes eingestellt werden, indem der Permanentmagnet weiter von dem Spalt entfernt wird, um das wirkende Feld zu verringern, oder indem der Permanentmagnet weiter an den Spalt heran gebracht wird, um das wirkende Feld zu verstärken. Nachteilig daran ist aber, dass für jede gewünschte Stärke eines Stoßes, ab der der Dämpfer arbeiten soll, der Permanentmagnet in seiner Position verändert werden muss. Stöße mit geringeren Losbrechmomenten werden nicht gedämpft. Bei Stößen mit größeren Losbrechmomenten öffnet der Durchgangskanal und der Stoß wird entsprechend der Feldstärke gedämpft.

Für ein gutes und ergonomisches Ansprechverhalten ist ein Nulldurchgang des Kraft - Geschwindigkeitsverlaufs erforderlich, so dass sich ein ruhender Kolben schon bei kleinen oder kleinsten Kräften zu bewegen beginnt. Ein Nulldurchgang der Kennlinie des Dämpfers ist auch für einen homogenen Übergang von der Druck- zur Zugstufe erforderlich. Ein Nulldurchgang liegt bei einem System nach der DE 698 21 799 T2 aber nicht vor.

Um einen Nulldurchgang der Dämpferkennlinie und eine niedrige Grunddämpfung zu erhalten, die auch bei geringen Stößen wirkt, ist mit der DE 198 20 570 A1 der Einsatz eines Bypass-Kanals bei einem Dämpfer mit einem elektrorheologischen Fluid bekannt geworden, in welchem das elektrorheologische Fluid ohne Beeinflussung durch das elektrische Feld fließen kann. Es sind mit einem elektrischen Feld beaufschlagbare Strömungskanäle vorgesehen, um die Dämpfungseigenschaften zu steuern. Bei einem solchen System wird die Kennlinie des Dämpfers durch die Auslegung des Bypass-Kanals und des mit einem elektrischen Feld beaufschlagbaren Strömungskanals definiert.

Aber auch dieses System hat den grundsätzlichen Nachteil, dass bei dem Übergang von dem Low-Speed-Bereich zu dem High-Speed-Bereich die Losbrechkraft schlagartig überwunden wird. Der Kraft - Geschwindigkeitsverlauf des Dämpfers weist dort einen Knick auf. Aufgrund der relativ geringen Grundbelastung durch das relativ geringe Fahrradgewicht liegt bei dem Einsatz an Fahrrädern der Knickpunkt in dem ständigen Arbeitsbereich des Dämpfers und wird von dem Fahrer eines Fahrrads als unangenehm empfunden, da sich das Verhalten des Dämpfers an dem Knickpunkt praktisch schlagartig ändert. Außerdem beeinflusst eine schlagartige Änderung des Dämpfungsverhaltens auch die Traktion und somit gegebenenfalls die Fahrsicherheit.

Bei bekannten und konventionellen Fahrraddämpfern werden zur Vermeidung eines Knicks in der Dämpferkennlinie an dem Übergang von dem Low-Speed-Bereich zu dem High-Speed-Bereich sogenannte Shim-Ventile eingesetzt, die einen sanften Übergang von dem Low-Speed-Bereich zu dem High-Speed-Bereich gewährleisten. Dazu weisen die Shim-Ventile eine Vielzahl von dünnen Metallplättchen auf, die an einem Strömungskanal vorgesehen sind. Bei Strömung des Dämpfungsfluids von dem Strömungskanal auf die Metallplättchen des Shim-Ventils öffnet das Shim-Ventil mit zunehmender Geschwindigkeit des Dämpferkolbens zunehmend, da sich die einzelnen Metallplättchen zunehmend elastisch verbiegen. Es ergibt sich ein abgerundeter und weicher Übergang des Low-Speed-Bereichs zu dem High-Speed-Bereich der Dämpferkennlinie. Abrupte Änderungen des Dämpferverhaltens werden vermieden und es wird für eine weitgehende Traktion der Laufräder gesorgt. Ein solcher weicher Übergang der Dämpferkennlinie ist wichtig für den vorteilhaften Betrieb eines Fahrrads.

Ein mit Shim-Ventilen ausgerüstetes System funktioniert, hat aber den Nachteil, dass es nicht oder nur sehr aufwendig anpassbar ist, da dazu z. B. die Shim-Ventile ausgetauscht werden müssen.

Es ist deshalb die Aufgabe der vorliegenden Erfindung, eine Dämpfereinrichtung zur Verfügung zu stellen, die einen anpassbaren Übergangsbereich der Dämpferkennlinie von dem Low-Speed-Bereich zu dem High-Speed-Bereich aufweist. Insbesondere soll bei kleineren Stößen auch eine effektive Dämpfung möglich sein. In bevorzugten Weiterbildungen soll die Dämpfung über einen weiten Einstellbereich einfach anpassbar sein.

Diese Aufgabe wird gelöst durch eine Dämpfereinrichtung mit den Merkmalen des Anspruchs 1 und durch eine Dämpfereinrichtung mit den Merkmalen des Anspruchs 34. Bevorzugte Weiterbildungen der erfindungsgemäßen Dämpfereinrichtung sind Gegenstand der jeweiligen Unteransprüche. Weitere Vorteile und Merkmale der vorliegenden Erfindung ergeben sich aus den Ausführungsbeispielen.

Die erfindungsgemäße Dämpfereinrichtung ist insbesondere für den Einsatz an einem Fahrrad vorgesehen und umfasst wenigstens eine erste Dämpferkammer und wenigstens eine zweite Dämpferkammer, welche über wenigstens ein Ventil mit wenigstens einem Dämpfungskanal miteinander gekoppelt sind. Weiterhin ist wenigstens eine Magneteinrichtung vorgesehen und wenigstens in dem Dämpfungskanal ist ein durch ein Feld beeinflussbares Fluid vorgesehen, wobei die Felderzeugungseinrichtung dazu strukturiert und geeignet ist, mit einem Feld auf das durch ein Feld beeinflussbare Fluid in dem Dämpfungskanal einzuwirken. Wenigstens eine Einstelleinrichtung ist vorgesehen, mit welcher das in dem Dämpfungskanal wirkende Feld einstellbar ist. Dabei ist mit der Einstelleinrichtung wenigstens ein Anteil des Querschnittsfläche des Dämpfungskanals einstellbar, der einem Feld bestimmter und insbesondere vorbestimmter Stärke ausgesetzt ist, sodass die Querschnittsfläche des Dämpfungskanals auch nur teilweise einem Feld bestimmter Stärke aussetzbar ist.

Die erfindungsgemäße Dämpfereinrichtung hat viele Vorteile. Ein erheblicher Vorteil der erfindungsgemäßen Dämpfereinrichtung ist, dass der Querschnitt des Dämpfungskanals nicht insgesamt und vollständig einem bestimmten magnetischen und/oder auch elektrischen Feld ausgesetzt werden muss, sondern es ist möglich, nur einen Anteil des Querschnittes des Dämpfungskanals dem Feld auszusetzen. Das kann beispielsweise darüber erfolgen, dass die dem Feld ausgesetzte Spaltgröße über die Einstelleinrichtung eingestellt wird. Dazu kann die Felderzeugungseinrichtung und/oder der Dämpfungskanal gegeneinander verstellbar ausgeführt sein. Es wird die Inhomogenität des Feldes ausgenützt.

Die Erfindung führt praktisch zu einer quasi Mehrteilung des Dämpfungskanals und in einem einfachen Fall zu einer Dreiteilung des Spaltes des Dämpfungskanals in drei verschiedene Wirkbereiche: Ein Wirkabschnitt oder Wirkbereich des Querschnittes ist dem vollen Feld ausgesetzt, ein Übergangsabschnitt oder Übergangsbereich des Querschnittes ist nur einem Teilfeld ausgesetzt und ein Teil des Querschnittes - der Bypass-Abschnitt - ist dem Feld gar nicht oder fast gar nicht ausgesetzt. Die Mehrteilung erfolgt insbesondere ohne separate Kanäle oder Trennwände in Abschnitte oder Bereiche nicht mechanisch, sondern vorzugsweise nur durch das Magnetfeld. Das gilt auch für den Bypass-Abschnitt, welcher durch einen Teil des Querschnittes des Dämpfungskanals gebildet wird.

Die Aufteilung des Querschnittes des Dämpfungskanals erfolgt durch ein örtlich inhomogenes Feld, welches in dem Bypass-Abschnitt eine geringe oder sehr geringe Stärke und in dem Wirkabschnitt eine hohe oder höhere Stärke aufweist. Zwischen dem Bypass-Abschnitt und dem Wirkabschnitt ist insbesondere der Übergangsbereich vorgesehen, der über seinem Querschnittsanteil stark inhomogen ausgebildet ist und über den die Feldstärke von dem geringeren Wert des Bypass-Abschnitts auf den höheren Wert des Wirkabschnitt ansteigt.

Vorzugsweise ist die Feldstärke über den Querschnittsanteil des Wirkabschnitts eher konstant. Vorzugsweise ist die Feldstärke über den Querschnittsanteil des Bypass-Abschnitts ebenfalls eher konstant. In dem Übergangsbereich ist die Feldstärke stark inhomogen ist und steigt von dem geringen Wert in dem Bypass-Abschnitt auf den hohen Wert in dem Wirkabschnitt an.

Der wenigstens eine Bypass-Abschnitt wirkt als Bypass-Kanal und führt zu einem Nulldurchgang der Kennlinie der Dämpfereinrichtung. Aufgrund der veränderlichen Querschnittsgröße des Bypass-Kanals kann die Steigung der Dämpferkennlinie wunschgemäß eingestellt werden.

Der Übergangsbereich oder Übergangsabschnitt ist nur einem insbesondere inhomogenen Teilfeld - dem schwächer werdenden Randfeld (Streufeld) - ausgesetzt, in welchem die Verkettung der Partikel schwach ist und zum Rand hin stetig schwächer wird. Der Übergangsbereich bleibt bei geringer Belastung geschlossen. Das Teilfeld bewirkt bei geringer Belastung praktisch einen Verschluss des Übergangsbereichs. Bei geringer Belastung bzw. geringen Stößen bestimmt nur der eingestellte Bypass-Abschnitt den jeweiligen Arbeitspunkt auf der Dämpferkennlinie. Der eingestellte Bypass-Abschnitt definiert die Kennlinie des Dämpfers bei geringer Belastung.

Bei zunehmender Belastung durch eine höhere Kolbenkraft bzw. Kolbengeschwindigkeit reißt die durch den Bypass-Abschnitt fließende Strömung des Dämpfungsfluids die teilweise bzw. schwach miteinander verketteten Partikel zunächst über einen Teil in dem benachbarten Übergangsbereich mit. Außerdem übersteigt mit steigender Belastung die Scherkraft die Bindungskraft der verketteten Partikel. Der Strömungsquerschnitt des Bypass-Abschnitts wird mit zunehmender Belastung folglich größer und die Querschnittsfläche des geschlossenen Übergangsbereichs entsprechend kleiner. Damit wird ein nicht-lineares Dämpferverhalten realisiert. Der Übergangsbereich der Dämpferkennlinie von dem Low-Speed-Bereich zu dem High-Speed-Bereich wird gekrümmt und ein ergonomisch ungünstiger Knickpunkt wird zuverlässig vermieden. Es kann eine stetige und zu beiden Enden hin asymptotische Dämpferkennlinie erzeugt werden. Dadurch ergeben sich vielfältige Möglichkeiten, da beispielsweise eine praktisch unbeeinflusste Spaltgröße in dem Dämpfungskanal kontinuierlich, quasi-kontinuierlich oder in bestimmten Schritten veränderbar ist. Beispielsweise kann die von einem Feld im Wesentlichen unbeeinflusste Querschnittsfläche des Dämpfungskanals in 10 %-, 20 %-, 25 %-oder in 33 %-Schritten einstellbar sein, um in zwei, drei oder mehr Schritten einen entsprechenden Anteil der Querschnittsfläche des Dämpfungskanals dem Magnetfeld auszusetzen.

Vorzugsweise ist mit der Einstelleinrichtung der Flächenanteil des Querschnittes des Dämpfungskanals einstellbar, auf welchen ein Feld bestimmter Stärke einwirkt. Dabei wirkt der Flächenanteil des Dämpfungskanals, der nicht von dem Feld beeinflusst wird, praktisch als Bypass, sodass durch das Feld die bei kleineren Stößen wirksame Querschnittsfläche entsprechend verkleinert wird, während bei Stößen, die die Losbrechkraft des dem Feld ausgesetzten und durch ein Feld beeinflussbaren Fluids übersteigt, die vollständige Querschnittsfläche des Dampfungskanals zur Dämpfung eingesetzt wird.

Es ist auch möglich, das zusätzlich oder auch anstelle von dem Flächenanteil der Volumenanteil des Dämpfungskanals einstellbar ist, auf welchen das Feld bestimmter Stärke einwirkt.

Über den gesamten Querschnitt des Dämpfungskanals kann ein Mittelwert einer Feldstärke bzw. ein gesamter Durchschnittswert bestimmt werden. Das Feld ist über den Querschnitt des Dämpfungskanals inhomogen. Durch eine Einstelleinrichtung kann der Querschnittsanteil eingestellt werden, in dem das Feld schwächer oder stärker ist als der gesamte Durchschnittswert der Feldstärke.

Insbesondere kann das Verhältnis von gleichzeitig auf den Dämpfungskanal einwirkender maximaler Feldstärke und minimaler Feldstärke eingestellt werden, während auch der Flächenanteil einstellbar ist, in dem ein Magnetfeld mit überdurchschnittlicher Stärke wirkt. Vorzugsweise ist der Flächenanteil einstellbar, über den das Magnetfeld inhomogen ist und sich von der maximalen Feldstärke auf die minimale Feldstärke reduziert.

In bevorzugten Weiterbildungen ist zusätzlich wenigstens eine Stärke des auf den Dämpfungskanal einwirkenden Feldes einstellbar. Dadurch kann ergänzend zur Einstellung des Anteils des Querschnittes des Dämpfungskanals auch die Höhe der Losbrechkraft beeinflusst werden.

Als Felderzeugungseinrichtung ist insbesondere eine Magneteinrichtung vorgesehen, welche ein magnetisches Feld erzeugt. Ein hervorragend dafür geeignetes Fluid ist ein magnetorheologisches Fluid (MRF), welche sehr schnell auf magnetische Felder reagieren. Die Felderzeugungseinrichtung kann als Dauermagnet oder als Elektromagnet ausgeführt sein. Mit magnetorheologischen Systemen kann die Dämpferkennlinie grundsätzlich beliebig eingestellt werden.

In anderen Ausgestaltungen kann als Felderzeugungseinrichtung auch eine Erzeugungseinrichtung für ein elektrisches Feld vorgesehen sein. Dafür sind elektrorheologische Fluide (ERF) geeignet.

Besonders bevorzugt wird als Felderzeugungseinrichtung eine Magneteinrichtung eingesetzt. Deshalb werden im Folgenden die speziellen Begriffe für die magnetische Lösung verwendet, um die Erfindung sprachlich klarer herauszustellen. Es wird aber darauf hingewiesen, dass in entsprechender Weise auch die bei einer Lösung mit einem elektrischen Feld geltenden Begriffe umfasst sein sollen, sodass unter "Magnetfeld" im Folgenden in entsprechender Weise auch ein "Elektrisches Feld" zu verstehen ist. Unter einem magnetorheologischen Fluid ist bei einer analogen elektrischen Lösung ein elektrorheologisches Fluid zu verstehen etc.

Eine Ausbildungsform der Erfindung sieht vor, dass durch mehrere magnetische Pole mehrere Übergangsbereiche im Dämpfungskanal entstehen. Diese Pole bilden eine kammartige Struktur, die das Magnetfeld in mehreren Bereichen bündelt und so mehrere Übergangsbereiche erzeugt. Der Effekt eines Übergangsbereiches kann so vervielfacht werden.

Durch ein kammartiges Element können über eine Teilung der magnetischen Pole mehrere Übergangsbereiche erzeugt werden. Beispielsweise kann ein verstellbarer Magnet mehrere Lücken (Pole) haben, die Übergangsbereiche im Magnetfeld entstehen lassen.

Die Stärke des Magnetfeldes kann über eine Variation des Spaltabstandes eingestellt werden. Beispielsweise kann aber auch ein Zusatzmagnet angekoppelt werden, der das Magnetfeld verstärkt.

Denkbar ist auch ein teilweises oder vollständiges Abschwächen des Feldes über magnetische Kurzschlüsse außerhalb des zu beeinflussenden Kanalabschnitts, indem magnetisch leitendes Material zwischen Magneteinrichtung und Durchgangskanal gebracht wird. Ebenso können zumindest Teilbereiche des magnetischen Feldes abgeschwächt werden, wenn mit magnetisch nicht leitendem Material der "Luftspalt" im Magnetfeld vergrößert wird.

Möglich ist auch das Verändern der Feldstärke über Änderungen an den ferromagnetischen Polstücken, welche den magnetischen Kreis außerhalb des Durchgangskanals schließen. Über Form und die Sättigungsfeldstärke des Materials kann der gesamte magnetische Fluss beeinflusst werden.

In bevorzugten Ausgestaltungen kann die Einstelleinrichtung wenigstens ein längsverschiebliches Einstellelement umfassen.

Vorzugsweise umfasst die Einstelleinrichtung aber wenigstens eine Dreheinrichtung, wobei die Dreheinrichtung insbesondere wenigstens einen Dauermagneten aufweist. Eine Dreheinrichtung ermöglicht einen kompakten Aufbau und vielfältige Einstellmöglichkeiten. Zudem ist durch die Einstellmöglichkeit eines weiten Dämpfungsbereichs durch eine Drehbewegung eine hohe Benutzerfreundlichkeit, ein wesentliches Merkmal beim Einsatz am Fahrrad, einfach gegeben.

Zur Erhöhung des Übergangsbereiches könnte die Dreheinrichtung beispielsweise einen Drehmagneten mit mehrere Lücken (Polen) aufweisen, die eine entsprechende Anzahl an Übergangsbereichen im Magnetfeld entstehen lassen, um durch eine solche Struktur den Übergangsbereich zu vergrößern.

Vorzugsweise umfasst die Dreheinrichtung wenigstens eine Dreheinheit zur Einstellung wenigstens eines Dämpfungskanals für die Zugstufe und/oder eine Dreheinheit zur Einstellung wenigstens eines Dämpfungskanals für die Druckstufe. Möglich ist es auch, dass eine Dreheinheit vorgesehen ist, die zur Einstellung der Druckstufe und der Zugstufe dient.

Vorzugsweise ist allerdings eine Dreheinheit zur Einstellung wenigstens eines Dämpfungskanals für die Zugstufe und eine Dreheinheit zur Einstellung wenigstens eines Dämpfungskanals für die Zugstufe vorgesehen, wobei die beiden Dreheinheiten koaxial ausgebildet sind.

In allen Ausgestaltungen und Weiterbildungen ist vorzugsweise wenigstens eine Dreheinheit der Dreheinrichtung oder die Dreheinrichtung insgesamt an der Kolbenstange vorgesehen.

In anderen Ausgestaltungen ist wenigstens eine Dreheinheit auf der Außenseite einer Dämpferkammer angeordnet.

Wenn wenigstens ein Dämpfungskanal an dem Dämpfungskolben und insbesondere auf einer äußeren Oberfläche des Dämpfungskolbens vorgesehen ist, kann ein Magnetfeld durch das insbesondere aus Leichtmetall, Aluminium, Magnesium oder aus einem Faserverbundwerkstoff bestehende Dampfergehäuse hindurch auf den im Dämpferkolben bzw. am Dämpferkolben vorgesehenen Dämpfungskanal einwirken. Bei einer solchen Ausgestaltung kann über ein einfache Drehbewegung einer mit einem Dauermagneten versehenen Dreheinheit auf der Außenseite des Dämpfergehauses die Dämpfungseigenschaft des Dämpfers beeinflusst werden, wenn die Dreheinheit mit dem dort vorgesehenen Dauermagneten passend zu dem Dämpfungskanal ausgerichtet wird. Ein erheblicher Vorteil ist, dass die Verstellung ohne direkte mechanische Verbindung/Durchführung von außen nach innen erfolgt. Dies ist bezüglich Dichtheit oder auch bei einer Reinigung des Zweirades mit Hochdruckgeräten usw. sehr vorteilhaft.

Dabei kann der Dauermagnet an der Dreheinheit sowohl in axialer Richtung des Dämpfers ausgerichtet sein, sodass der Nordpol an einem axialen Ende und der Südpol an dem anderen axialen Ende vorliegen, es ist aber auch möglich, dass der Magnet in radialer Richtung ausgerichtet ist.

In beiden Möglichkeiten wird ein Dämpfungskanal, der benachbart zu dem Dauermagneten angeordnet wird, bei geeigneter Ausgestaltung von dem Magnetfeld teilweise oder ganz durchsetzt, sodass dort die Viskosität des magnetorheologischen Fluids entsprechend beeinflusst wird.

Werden zwei Dreheinheiten als Drehringe ausgeführt, so kann ein Drehring zur Beeinflussung des Dämpfungskanals der Druckszufe und der andere Drehring zur Beeinflussung des Dämpfungskanals der Zugstufe dienen, wobei durch eine entsprechende Drehung ein entsprechend großer Teil der Spaltgröße des Dämpfungskanals von dem Magnetfeld beeinflusst wird.

In bevorzugten Weiterbildungen ist wenigstens eine Dreheinheit und wenigstens ein längsbewegliches oder langsverschiebliches Einstellelement oder ein längsbewegliches Einstelleinheit vorgesehen, wobei insbesondere auch eine Dreheinheit längsbeweglich vorgesehen sein kann. Durch die Drehbewegung kann beispielsweise die Größe des Bypass-Kanals verändert werden, während z. B. durch die Längsverschiebung der Flächenanteil des Übergangsbereichs oder die im Dämpfungskanal wirkende Stärke des Magnetfeldes veränderbar ist.

Die Drehbewegung kann auch den Übergangsbereich beeinflussen, so z.B. die Anzahl der wirksamen Polpaare, welche den Dämpfungskanal beeinflussen oder es kann die Feldstärke im voll dem Feld ausgesetztem Bereich z.B. durch Veränderung des Abstandes des Felderzeugers zum Spalt.

In bevorzugten Ausgestaltungen ist wenigstens eine Steuerstange vorgesehen, die dann vorzugsweise an der Kolbenstange aufgenommen ist.

In allen Ausgestaltungen kann wenigstens ein Steuerventil vorgesehen sein, welches beispielsweise als 1-Weg-Ventil dient, um eine getrennte Steuerung der Dämpfungseigenschaften der Druckstufe und der Zugstufe zu ermöglichen.

Auf ein Sicherheitsventil kann in der Regel verzichtet werden, da bei Auftreten einer großen Last die Losbrechkraft des dem Magnetfeld ausgesetzten magnetorheologischen Fluids überwunden wird und somit der Dämpfungskanal über seinen vollständigen Querschnitt durchströmt wird, obwohl gegebenenfalls ein magnetisches Feld auf einen Teil des Dämpfungskanals einwirkt.

Dabei ist das schnelle Ansprechen ein wesentlicher Vorteil gegenüber Lösungen nach dem Stand der Technik, bei denen zumindest ein mechanisches Sperrelement wie z.B. ein federbelasteter Teller bewegt werden muss. Bei Überschreiten der Losbrechkraft verzögert lediglich nur die Trägheit des Fluids dessen Beschleunigung. Ebenso schnell kehrt der Dämpfer in den Ausgangszustand zurück sobald die Last auf ein Niveau unter der Losbrechkraft absinkt.

Auch auf ein Shim-Ventil kann in der Regel verzichtet werden, da durch die teilweise Beaufschlagung des Dämpfungskanals mit einem Magnetfeld sich zum Rand der Einwirkung des Magnetfeldes hin der Übergangsbereich befindet, der einem zum Rand hin immer schwächer werdenden Magnetfeld ausgesetzt wird, sodass dort auch die Losbrechkraft immer geringer wird. Das führt zu dem hier realisierten weichen Übergang der Dämpferkennlinie, die bei kleinen Stößen eine entsprechend geringe Dämpfung bewirkt, während bei großen Stößen eine entsprechend große Dämpfung erfolgt. Im Übergangsbereich wird eine asymptotische Rundung erzielt, die ein besonders angenehmes Fahrverhalten erlaubt.

Ein wesentlicher Vorteil dieser Lösung gegenüber dem Strand der Technik ist, dass der Übergangsbereich einstellbar ausgeführt werden kann. Denn anstatt den Dämpfer zerlegen zu müssen um über Veränderungen am Shim-Paket die Kennlinie im Krümmungsbereich, wo der Übergang vom low speed zum high speed Bereich erfolgt, zu verändern, kann nun die Einstellung über das Magnetfeld von außen erfolgen.

Die Kennlinie des Dämpfers kann in der beschriebenen Ausführung mit Drehring außen auch während des Betriebs angepasst werden.

Ein außerhalb des Dämpfergehäuses vorgesehener Einstellring als Dreheinheit nutzt auch den Vorteil eines magnetorheologischen Dämpfers, dass ein Magnetfeld zur Steuerung auch durch Bauteile hindurch wirken kann, so wie beispielsweise durch ein aus Aluminium bestehendes Dämpfergehäuse hindurch.

In besonders bevorzugten Weiterbildungen ist wenigstens eine Heatpipeeinrichtung vorgesehen, die wenigstens ein Wärmerohr zur Abfuhr der bei der Dämpfung entstehenden Wärme umfasst. Eine solche Heatpipeeinrichtung ist insbesondere dann vorteilhaft und einfach einzusetzen, wenn die Einstellung der Dämpfungseigenschaften über eine Dreheinheit erfolgt, die als Drehring außerhalb des Dämpfergehäuses vorgesehen und angeordnet ist. Dann kann die Kolbenstange der Dämpfereinrichtung zur Aufnahme der Heatpipe dienen, da das Innere der Kolbenstange nicht mehr zur Durchführung von Einstellelementen zur Einstellung eines Querschnitts des Dämpfungskanals verwendet werden muss.

Vorzugsweise umfasst die Heatpipeeinrichtung wenigstens ein Wärmerohr zur Abfuhr der bei der Dämpfung entstehenden Wärme.

Weiterhin kann eine Konvektionseinheit und eine Rückflusseinrichtung, sowie eine Kühleinrichtung vorgesehen sein. Die Rückflusseinrichtung dient zum Rücktransport des nach der Wärmeabgabe wieder kondensierten Wärmemediums, während die Konvektionseinheit insbesondere Kühlrippen umfasst und zur Abgabe der Wärme nach außen dient. Die Rückflusseinrichtung kann ein Gewebestutzen sein, der sich von einem Ende bis zum anderen Ende des Wärmerohrs erstreckt und durch die Kapillarwirkung das flüssige Wärmemedium auch gegen die Schwerkraft zurücktransportiert.

Insbesondere ist das Wärmerohr mit wenigstens einem Wärmemedium gefüllt, das bei wenigstens einer Temperatur zwischen 20°C und 60°C zu erheblichen Anteilen dampfförmig und zu erheblichen Anteilen flüssig vorliegt. Möglich und bevorzugt ist auch der Einsatz eines Dämpfungsmediums, welches bei einer Temperatur von beispielsweise 10°C oder 20°C noch als Feststoff vorliegt, während es bei höheren Temperaturen schmilzt und entsprechend verdampft.

In weiteren bevorzugten Ausgestaltungen kann eine Zusatzfeder vorgesehen sein, welche insbesondere als Gasfeder ausgeführt ist. Die Zusatzfeder kann außerhalb des Gehäuses angeordnet sein, kann aber insbesondere wenigstens auch teilweise innerhalb der Kolbenstange angeordnet sein.

Eine weitere erfindungsgemäße Dämpfereinrichtung ist für ein Zweirad vorgesehen und umfasst wenigstens eine erste Dämpferkammer und wenigstens eine zweite Dämpferkammer, welche über wenigstens ein Ventil mit wenigstens einem Dämpfungskanal miteinander gekoppelt sind. Eine Felderzeugungseinrichtung dient dazu, ein Feld in dem Dämpfungskanal zu erzeugen. In dem Dämpfungskanal ist ein durch ein Feld beeinflussbares Fluid enthalten und die Felderzeugungseinrichtung ist dafür vorgesehen, mit einem Feld auf das durch ein Feld beeinflussbare Fluid in dem Dämpfungskanal einzuwirken. Dabei weist der Dämpfungskanal wenigstens einen Bypass-Abschnitt und wenigstens ein Übergangsbereich auf. Über einer Fläche des Übergangsbereich steigt das Feld stark an, während es im Bypass-Abschnitt quasi feldfrei ist, sodass der Dämpfungskanal nur teilweise einem Feld bestimmter Stärke aussetzbar ist.

In bevorzugten Weiterbildungen umfasst diese erfindungsgemäße Dämpfereinrichtung wenigstens ein Merkmal der Dämpfereinrichtung, die zuvor beschrieben wurde.

In allen Ausgestaltungen ist es bevorzugt, dass das auf en Dämpfungskanal wirkende Feld einen Gradienten aufweist, der quer zur Strömungsrichtung des Fluids ausgerichtet ist. Der Gradient ist vorzugsweise im Wesentlichen senkrecht bzw. normal zur Strbmungsrichtung des Fluids ausgerichtet. Vorteilhaft ist, dass unterschiedliche Bereiche eines Querschnittes unterschiedlich starke Felder aufweisen können. Dadurch kann sich der Widerstand der Strömungsbahn einzelner Partikel von dem Widerstand benachbarter Strömungsbahnen unterscheiden. Der Wide=stand verschiedener Strömungsbahnen durch den Querschnitt des Ventils kann sich vorzugsweise um mehr als einen Faktor zehn und insbesondere einhundert voneinander unterscheiden.

Besonders vorteilhaft ist es, wenn die Felderzeugungseinheit ein inhomogenes Feld erzeugen kann. Dabei soll das Feld im Wesentlichen quer zu der Strömungsrichtung oder sogar normal zu der Strömungsrichtung des Fluids inhomogen sein, um die beschriebenen Bereiche ausbilden zu können. Mit einem nur in Strömungsrichtung inhomogenen Feld lässt sich der beschriebene Effekt hingegen nicht erreichen.

Durch die Inhomogenität des Feldes wird der Anteil der Querschnittsfläche einstellbar, der einem unterdurchschnittlich und/oder einem überdurchschnittlich starken Feld ausgesetzt ist. Die maximale oder minimal im Querschnitt wirkende Feldstärke muss dabei nicht verändert werden, sondern es wird der Querschnittsanteil verändert, über dem die Feldstärke von dem maximalen auf den minimalen Wert abfällt.

Durch das Ausbilden von verschiedenen Bereichen kann abhangig von dem Magnetfeld und dem Druckunterschied das Strömen des Fluids komplett verhindern, nur in einem Teilbereich oder auch im gesamten Dämpfungskanal zulassen. Eine Dämpfereinrichtung nach dem Stand der Technik steuert den Dämpfungskanal nur als Ganzes: entweder die Strömung wird gesperrt oder es wird mit von der mittleren Feldstärke abhängigem Strömungswiderstand eine Strömung zugelassen.

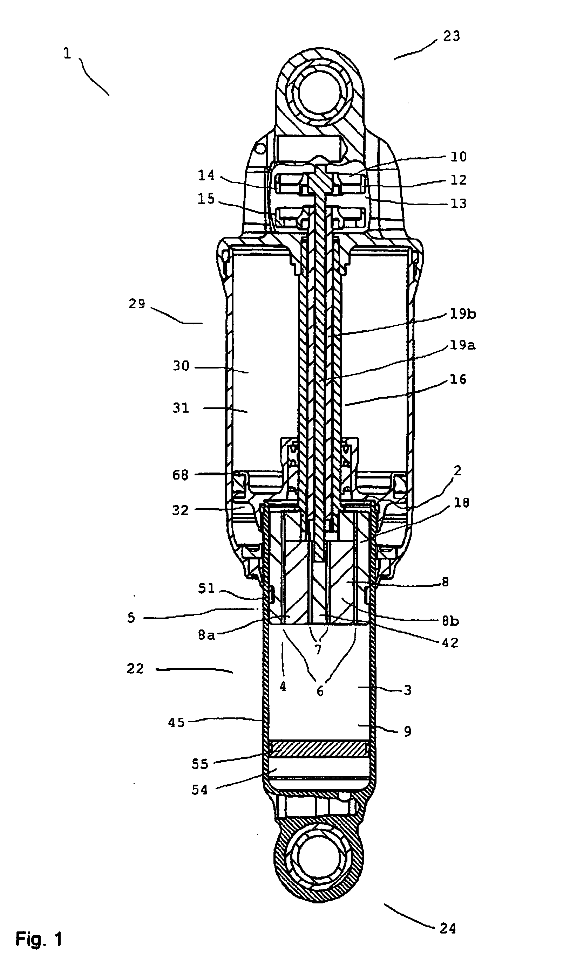

Der Bypass-Abschnitt entspricht einer variablen und einstellbaren Leckage oder einem variablen und einstellbaren Bypass. Die vorliegende Erfindung variiert und nützt diese Bereiche gezielt als Einstellmöglichkeit, um besonders vorteilhafte Ventilkennlinien einfach erreichen zu können. Weitere Vorteile und Eigenschaften der vorliegenden Erfindung ergeben sich aus den Ausführungsbeispielen, die mit Bezug auf die beiliegenden Figuren 1 - 17 im Folgenden beschrieben werden.

In den Figuren zeigen:
- Fig. 1: eine geschnittene Seitenansicht einer ersten erfindungsgemäßen Dämpfereinrichtung;
- Fig. 2: einen Schnitt durch den Dämpferkolben der Dämpfereinrichtung nach Fig. 1 in einer ersten Position;
- Fig. 3: einen Schnitt durch den Dämpferkolben der Dämpfereinrichtung nach Fig. 1 in einer zweiten Position;
- Fig. 4: einen Schnitt durch den Dämpferkolben der Dämpfereinrichtung nach Fig. 1 in einer dritten Position;
- Fig. 5: einen Schnitt durch den Dämpferkolben der Dämpfereinrichtung nach Fig. 1 in einer vierten Position;
- Fig. 6: eine perspektivische Ansicht einer zweiten erfindungsgemäßen Dämpfereinrichtung;
- Fig. 7: eine geschnittene Seitenansicht der Dämpfereinrichtung nach Fig. 6;
- Fig. 8: einen Schnitt durch den Dämpferkolben der Dämpfereinrichtung nach Fig. 6 in einer ersten Position;
- Fig. 9: eine perspektivische Ansicht der Dämpfereinrichtung nach Fig. 6 in einer zweiten Position;
- Fig. 10: einen Schnitt durch den Dämpferkolben der Dämpfereinrichtung nach Fig. 6 in einer zweiten Position;
- Fig. 11: einen Schnitt durch den Dämpferkolben der Dämpfereinrichtung nach Fig. 6 in einer dritten Position;
- Fig. 12: eine geschnittene Seitenansicht einer dritten erfindungsgemäßen Dämpfereinrichtung;
- Fig. 13: eine perspektivische und teilgeschnittene Ansicht der Dämpfereinrichtung nach Fig. 12;
- Fig. 14: eine schematische Ansicht einer Magneteinrichtung mit einer Kammstruktur von Dauermagneten zur Vergrößerung des Übergangsbereichs;
- Fig. 15: eine schematische Ansicht einer elektrischen Magneteinrichtung mit einer Kammstruktur zur Vergrößerung des Übergangsbereichs;
- Fig. 16: eine schematische Ansicht einer Dämpferkennlinie; und
- Fig. 17: zeigt schematisch zwei Verläufe der Feldstärke über dem Querschnitt des Dämpfungskanals.

Mit Bezug auf die Figuren 1 bis 6 wird zunächst ein erstes Ausführungsbeispiel einer erfindungsgemäßen Dämpfereinrichtung 1 beschrieben. Die Dämpfereinrichtung 1 ist hier als Hinterraddämpfer ausgeführt und weist ein erstes Ende 23 und ein zweites Ende 24 auf, welche mittelbar oder unmittelbar mit dem Rahmen bzw. dem Hinterrad entsprechend verbunden werden.

In anderen Ausgestaltungen ist es auch möglich, dass eine Federgabel mit einer entsprechenden Dämpfereinrichtung 1 versehen wird.

Die in Fig.1 im Schnitt dargestellte Dämpfereinrichtung 1 umfasst einen Dämpfer 22, der hier eine erste Dämpferkammer 2 und eine zweite Dämpferkammer 3 umfasst, die von einem Dämpfungskolben 18 voneinander getrennt sind. In dem Dämpfungskolben 18 sind Dämpfungskanäle 6 und 7 als Ventile 4 vorgesehen, die zur Dämpfung in der Druckstufe und in der Zugstufe dienen.

Sowohl die erste Dämpferkammer 2 als auch die zweite Dämpferkammer 3 und die Dämpfungskanäle 6 und 7 sind hier mit einem magnetorheologischen Fluid gefüllt, welches magnetorheologische Partikel, wie beispielsweise Carbonyleisenpulver in einer Trägerflüssigkeit enthält. Die Trägerflüssigkeit basiert vorzugsweise auf Öl mit Zusatzstoffen wie Stabilisatoren, Frostschutzmitteln, Abriebs-und Viskositätsverbesserern.

Eine Kolbenstange 16 schließt sich an den Dämpferkolben 18 an und führt durch eine hier als Gasfeder 30 ausgeführte Federeinrichtung 29. Die Gasfeder 30 umfasst eine erste Federkammer 31 und eine zweite Federkammer 32, die von einem Gaskolben getrennt sind.

An dem ersten Ende 23 ist hier eine Einstelleinrichtung 10 vorgesehen, die Dreheinheiten 14 und 15 als Einstellelemente 12 umfasst. Dabei dient die Dreheinheit 14 zur Einstellung der Zugstufe und die Dreheinheit 15 zur Einstellung der Druckstufe.

Die Dreheinheiten 14 und 15 sind mit Steuerstangen 19a und 19b versehen bzw. verbunden, die sich durch das Innere der Kolbenstange 16 hindurch erstrecken und koaxial zueinander angeordnet sind.

Das Ende der zentralen Steuerstange 19a ist mit einem Kern 42 verbunden, der aus einem magnetisch leitfähigen Material besteht. Das Ende der Steuerstange 19b ist mit der Magneteinrichtung 8 verbunden, die hier über den runden Querschnitt zwei gegenüberliegende Dauermagneten 8a und 8b umfasst, zwischen denen nicht magnetische Winkelsegmente 8c und 8d vorgesehen sind.

Zur Abdichtung des Dämpferkolbens in dem Dämpfergehäuse kann ein Kolbenring 51 als Dichtung vorgesehen sein. Es ist aber auch möglich, dass der Kolbenring 51 aus einem Dauermagneten besteht oder einen solchen umfasst, um die Dämpfungskolben 18 gegenüber dem Dämpfergehäuse 45 abzudichten. In einem solchen Fall sorgt das Magnetfeld des mit einem Permanentmagneten versehenen Kolbenrings 51 für eine vollständige Abdichtung zum Dämpfergehäuse 45, da in der Nähe des Permanentmagneten eine Verkettung der Partikel in dem magnetorheologischen Fluid bewirkt wird, die eine Abdichtung bewirken.

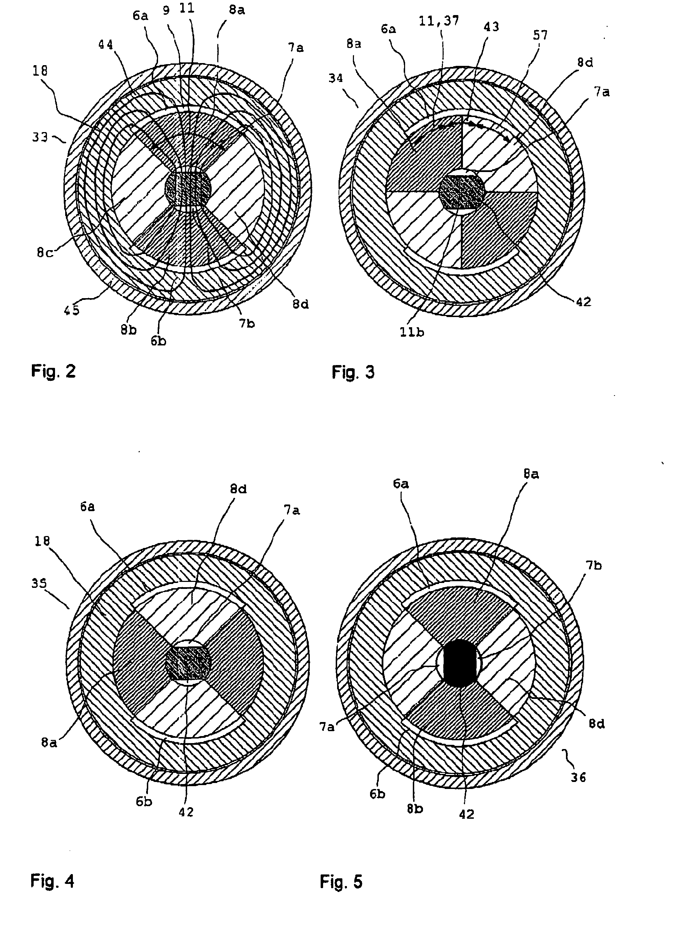

In Fig. 2 ist ein Querschnitt durch den Dämpferkolben dargestellt, wobei in schematischer Art und Weise einige Feldlinien des Magnetfeldes 44 eingezeichnet sind.

In dem Dämpfergehäuse 45 ist der Dämpferkolben 18 vorgesehen, in welchen Dämpfungsspalte 6a und 6b zur Dämpfung der Druckstufe und Dämpfungsspalte 7a und 7b zur Dämpfung der Zugstufe vorgesehen sind.

Die Dreheinheit 15 zur Einstellung der Druckstufe umfasst die Magneteinrichtung 8, die als ein zylindrisches Teil ausgebildet ist, und an der magnetische Segmente als Dauermagnete 8a und 8b durch nicht magnetische Winkelsegmente 8c und 8d getrennt sind. Zentral in der Dreheinheit 15 ist eine Öffnung vorgesehen, in der ein magnetisch leitfähiger Kern 42 vorgesehen ist. Zwischen dem Kern 42 und den Segmenten 8a bis 8d der Dreheinheit 15 für die Druckstufe sind Dämpfungsspalte 7a und 7b für die Zugstufe vorgesehen. Um die Dreheinheit 15 für die Druckstufe herum ist der Dämpfungskolben 18 vorgesehen, der gegenüber dem Dämpfergehäuse 45 gleitverschieblich - aber gedichtet - aufgenommen ist.

Dargestellt in Fig. 2 ist die erste Position 33, in der sowohl die Dämpfungsspalte 6a und 6b für die Druckstufe als auch die Dämpfungsspalte 7a und 7b für die Zugstufe vollständig von dem eingezeichneten Magnetfeld 44 durchsetzt sind, sodass die Dämpfungskanäle 6 und 7 hier einem maximalen Magnetfeld ausgesetzt sind und somit die Viskosität des Dämpfungsfluids entsprechend erhöhen. Dies ist die "Lock-out-Position", in der ein Einfedern in der Druckstufe und ein Ausfedern in der Zugstufe weitestgehend verhindert wird.

Wie in Fig. 2 ersichtlich, entspricht in der Lock out Position der Anteil 11 der Querschnittsfläche, der einem Magnetfeld ausgesetzt ist, dem gesamten Querschnitt des Dämpfungskanals 6a bzw. 6b. Das Dämpfungsfluid strömt nicht mehr durch die Dämpfungskanäle 6 und 7, sondern steht und verhindert dadurch ein Ein- und Ausfedern.

Wird die Dreheinheit 15 zur Einstellung der Dämpfung der Druckstufe gegen den Uhrzeigersinn um 45 Grad gedreht, ergibt sich die in Fig. 3 dargestellte zweite Position 34, in der sowohl die Dämpfungsspalte 6a und 6b der Druckstufe als auch die Dämpfungsspalte 7a und 7b der Zugstufe jeweils nur teilweise dem Magnetfeld 44 der Dauermagneten 8a und 8b ausgesetzt ist. Der Wirkabschnitt 37, also der Anteil 11 der Querschnittsfläche, der vollständig dem Magnetfeld ausgesetzt ist, entspricht etwa dem Überlappungswinkel des Dauermagneten und des Dämpfungsspalts 6a bzw. 6 b bzw. dem Überlappungswinkel des Dauermagneten und des Dämpfungskanals 6.

Am Rand des Überlappungsbereichs ergibt sich ein Winkelbereich 43, in dem das Magnetfeld des Dauermagneten 8a langsam schwächer wird, aber dennoch spürbar vorhanden ist. In diesem Bereich 43 findet eine geringere Verkettung der Partikel des magnetorheologischen Fluids 9 statt, sodass dort ein geringeres Losbrechkraft vorliegt als in dem Bereich 11a, der dem Magnetfeld stärker ausgesetzt ist.

Bei der zweiten Position 34 gemäß Fig. 3 liegt eine vorteilhafte Stellung des Dämpfers vor, in der sowohl kleinere Stöße zuverlässig gedämpft werden als auch starke Stöße entsprechend gedämpft werden, da bei starken Stößen die Losbrechkraft wenigstens im Übergangsbereich 43 überwunden wird und somit eine Abrundung der Kennlinie des Dämpfers ermöglicht wird.

Würde die Dreheinheit 15 der Druckstufe gemeinsam mit der Dreheinheit 14 für die Zugstufe gedreht, dann ändert sich das Feld im Dämpfungskanal 6 der Druckstufe wie oben beschrieben, das Feld im Dämpfungskanal 7 der Zugstufe bleibt aber annähernd unverändert.

Durch geeignete Materialwahl der magnetisch leitenden Komponenten und angepasstes Design, kann die Verstellung der Druck- und der Zugstufe entweder nahezu voneinander unabhängig oder wenn gewünscht auch kombiniert erfolgen.

In Fig. 4 ist eine dritte Position 35 dargestellt, in der sowohl die Dämpfungsspalte 6a und 6b des Dämpfungskanals 6 für die Druckstufe als auch die Dämpfungsspalte 7a und 7b soweit als möglich von den Dauermagneten 8a und 8b getrennt sind, sodass die Dämpfungsspalte der Dämpfungskanäle nur geringen Streufeldern der Dauermagnete ausgesetzt werden. In dieser Stellung ist die Dämpfung minimal, der Dämpfer stellt Bewegungen des Kolbens 18 gegenüber dem Dämpfergehäuse 45 eine kleinstmögliche Gegenkraft gegenüber.

In Fig. 5 ist ein Querschnitt des Dämpfungskolbens 18 dargestellt, bei dem die Dämpfungsspalte 6a und 6b des Dämpfungskanals 6 vollständig dem Magnetfeld der Dauermagneten 8a und 8b ausgesetzt sind, während die Dämpfungsspalte 7a und 7b des Dämpfungskanals 7 aus dem wirkungsbereich der Dauermagneten 8a und 8b herausgedreht wurden. In diesem Zustand wirkt ein "Lock-out" für die Druckstufe, während in der Zugstufe eine Dämpfung stattfindet oder die Dämpfung minimal ist. Insgesamt hat sich gezeigt, dass durch die Einstellung der Dämpfung über Dauermagnete, die die Dämpfungskanale nur teilweise mit einem Magnetfeld beaufschlagen können, eine flexible und effektive Dämpfereinstellung möglich ist.

Die Dämpferkennlinie im Low-Speed-Bereich wird durch den Bypass-Abschnitt definiert, der von dem Magnetfeld gar nicht oder fast gar nicht beeinflusst wird. Der Bypass-Abschnitt sichert den Nulldurchgang und stellt eine Dämpfung bei geringen Stößen sicher. Im High-Speed-Bereich der Dämpferkennlinie öffnet der dem vollen Magnetfeld ausgesetzte Wirkbereich, da dort die Verkettung der Partikel überwunden wird. Der Übergangbereich hingegen gewährleistet eine Rundung der Dämpferkennlinie beim Übergang von Low-Speed zu High-Speed, da dort in Abhängigkeit von der herrschenden Belastung ein entsprechender Teil der Partikel mitgerissen wird. Dadurch wird eine ergonomische und sichere Betriebsweise ermöglicht.

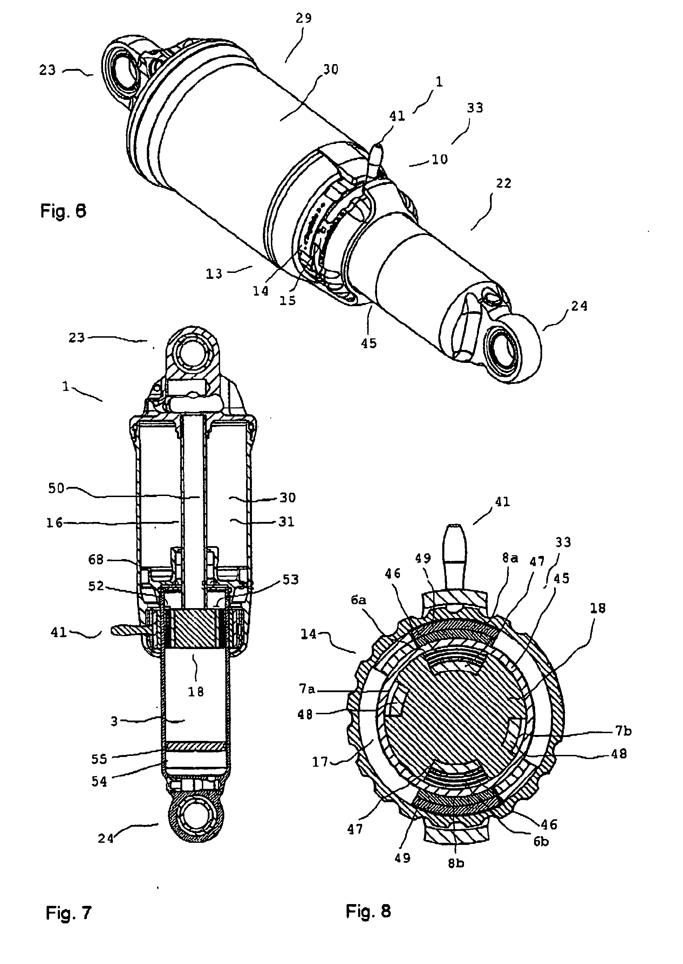

Mit Bezug auf die Fig. 6 bis 11 wird im folgenden ein zweites Ausführungsbeispiel einer erfindungsgemäßen Dämpfereinrichtung beschrieben.

Dabei umfasst die Dämpfereinrichtung 1 einen Dämpfer 22 und eine als Gasfeder 30 ausgeführte Federeinrichtung 29, die näher am ersten Ende 23 angeordnet ist, während der Dämpfer 22 näher am zweiten Ende 24 angeordnet ist.

In diesem Ausführungsbeispiel sind Dreheinheiten 14 und 15 einer Dreheinrichtung 13 als Einstelleinrichtung 10 vorgesehen. Im Unterschied zum vorherigen Ausführungsbeispiel sind die Dreheinheit 14 für die Zugstufe und die Dreheinheit 15 für die Druckstufe außen auf dem Dämpfergehäuse 45 vorgesehen und weisen keine direkte Verbindung zu den Dämpfungskanälen auf. Hier wirkt das magnetische Feld 44 der an den Dreheinheiten 14 und 15 aufgenommenen Dauermagnete 8a und 8b durch die aus Leichtmetall, vorzugsweise Aluminium oder einem Faserverbundwerkstoff bestehende Wandung des Dämpfergehäuses 45 hindurch auf die Dämpfungskanäle 6 und 7 der Druckstufe bzw. Zugstufe.

Wie in Fig. 7 in einer geschnittenen Seitenansicht der Dämpfereinrichtung 1 ersichtlich, weist die hohle Kolbenstange 16 im Innern eine Zusatzfeder 50 auf, die gegebenenfalls parallel zu der Gasfeder 30 geschaltet werden kann. Die Zuschaltung der Zusatzfeder 50 kann in einer hier nicht dargestellten Ausbauform automatisch in Abhängigkeit von der Gastemperatur erfolgen, wodurch die Temperaturabhängigkeit der Federkennlinie zumindest teilweise kompensiert werden kann. Bei Bedarf kann die Zusatzfeder 50 auch händisch zugeschaltet werden.

Die Beeinflussung der Dämpfung erfolgt an dem Dämpferkolben 18, auf dessen Außenoberfläche in vorbestimmten Winkelabständen Dämpfungskanäle für die Druckstufe und die Zugstufe vorgesehen sind.

Zur Erhöhung der Kapazität und der Wirkung sind in den Dämpfungsspalten 6a und 6b für die Druckstufe Fächerelemente 46 vorgesehen, die im Wesentlichen konzentrisch zu der Außenwand des Dämpfers 22 angeordnet sind und zu einer Verstärkung der Auswirkung des Magnetfeldes 44 führen. Entlang der Feldlinien des Magnetfelds 44 bilden sich Ketten in dem magnetorheologischen Fluid, wodurch der Durchtritt durch die mit den Fächerelementen 46 versehenen Dämpfungskanäle 6, 7 erschwert wird. Den maximalen Effekt erzielt man, wenn die Feldlinien normal auf die Oberflächen der Fächerelemente 46 verlaufen.

Die Fächerelemente 46 sind vorzugsweise aus ferromagnetischem Material, um den magnetischen Kreis nicht durch einen zusätzlichen "Luftspalt" zu belasten. Je nach gewünschtem Übergangsbereich kann es vorteilhaft sein, ein Material mit einer bestimmten magnetischen Sättigung zu verwenden. Beispielsweise ist im Dämpfer nach Figur 7 eine Stahllegierung mit einer magnetischen Sättigung von 1,6T vorgesehen.

Um bestimmte Kennlinien des Dämpfers einstellen zu können, sind aber auch Fächer aus Dauermagneten oder auch Fächer aus magnetisch nicht leitendem Material denkbar.

Radial innerhalb der Dämpfungskanäle 6 und 7 sind an dem Dämpferkolben 18 magnetische Leiter 47 und 48 vorgesehen, die zu einer Umlenkung des auf die Dämpfungskanäle 6 und 7 einwirkenden Magnetfeldes einwirkenden Magnetfeldes dienen.

Die Form der magnetischen Leiter 47, 48 richtet sich nach der Gestaltung des magnetischen Kreises. Hier dargestellt ist eine Variante, bei der der Magnet 8 entlang der Durchflussrichtung zweigeteilt ist: ein Polpaar erzeugt Feldlinien in Richtung des Kolbens 18 zu den inneren magnetischen Leitern 47, 48, das zweite Polpaar erzeugt Feldlinien in Richtung des äußeren magnetischen Leiters 49. Der magnetische Kreis wird in Durchflussrichtung über die magnetischen Leiter 47, 48, 49 geschlossen.

Wird der Dämpfungskolben 18 aus ferromagnetischem Material gefertigt, dann können die magnetischen Leiter 47, 48 entfallen.

Ein Bedienhebel 41 kann zur Einstellung dienen. Die als Drehringe ausgeführten Dreheinheiten 14 und 15 können aber auch direkt ergriffen und gedreht bzw. über einen Bowdenzug angesteuert werden.

In einer weiteren Variante erfolgt der Wechsel vom Lock out zur eingestellten Dämpfung mit dem Bedienhebel 14, wobei die Dämpfung über die Dreheinheiten 14, 15 voreingestellt werden kann.

Bei der in Fig. 8 dargestellten ersten Position 33 sind die Dämpfungsspalte 6a und 6b für die Druckstufe dem maximalen Magnetfeld ausgesetzt, während die Dämpfungsspalte 7a und 7b des Dämpfungskanals 7 der Zugstufe im Wesentlichen keinem Magnetfeld ausgesetzt sind.

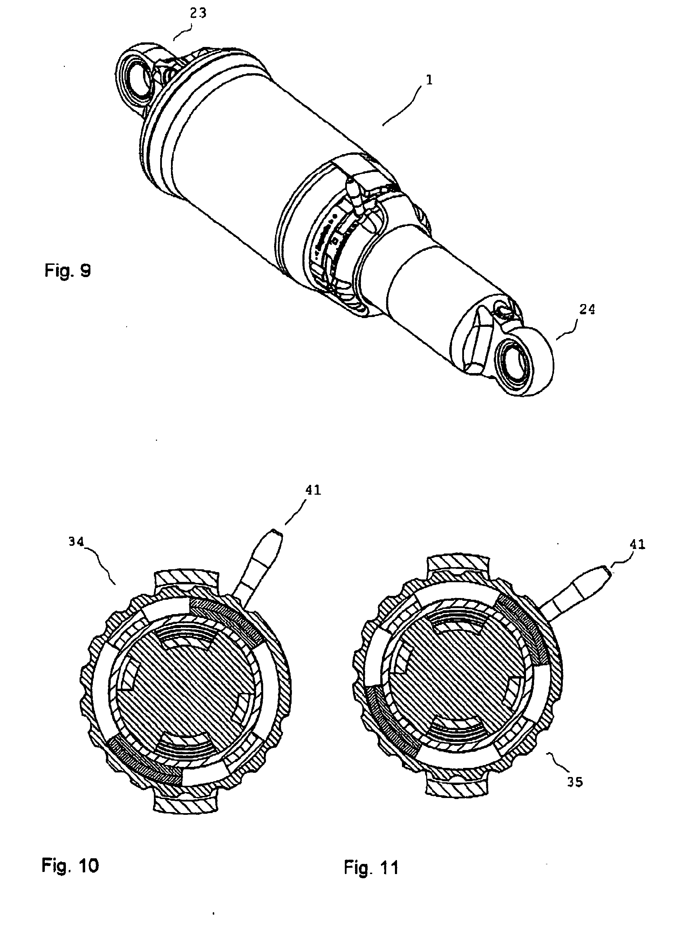

In Fig. 9 ist eine perspektivische Ansicht der Dämpfereinrichtung 1 dargestellt, wobei der Bedienhebel 41 im Uhrzeigersinn verdreht wurde, sodass die Dämpfungsspalte 6a und 6b des Dämpfungskanals 6 jeweils zur Hälfte dem Magnetfeld der Dauermagneten 8a und 8b ausgesetzt sind, während die andere Hälfte der Dämpfungsspalte 6a und 6 b im Wesentlichen frei vcn einem Magnetfeld sind. In Fig. 10 ist ein Querschnitt gezeigt.

In dieser zweiten Position 34 liegt eine mittlere Dämpfung der Druckstufe und eine geringe Dämpfung der Zugstufe vor.

Wird der Bedienhebel 41 im Uhrzeigersinn weiter gedreht, so werden die Dämpfungsspalte 6a und 6b des Dämpfungskanals 6 vollständig von den Dauermagneten 8a und 8b freigegeben, sodass die Dämpfung der Druckstufe ihr Minimum erreicht. Diese Situation zeigt Fig. 11.

Analog zur Druckstufe können die Magnete und magnetischen Leiter der Zugstufe unabhängig von der Druckstufe verstellt und so die Dämpfung der Zugstufe variiert werden. Die Bedienung kann beispielsweise über die Dreheinheit 14 ausgeführt werden.

In einer weiteren nicht dargestellten Ausführungsvariante könnten die Drehringe exzentrisch zur Dämpferachse positioniert sein und für die Druckstufe sowie die Zugstufe jeweils nur ein Dämpfungskanal mit oder ohne Fächerelemente vorgesehen sein, so dass sich beim Verdrehen auch der Abstand zwischen dem Dauermagneten und dem Dämpfungsspalt, und somit die Magnetflussdichte im magnetorheologischen Fluid ändert.

In einer weiteren nicht dargestellten Ausführungsvariante könnten anstatt der Dauermagnete auch Abschirmelemente verdreht oder auch axial verschoben werden, welche den magnetischen Fluss durch die Dämpfungskanäle beeinflussen und den Übergangsbereich vergrößern können.

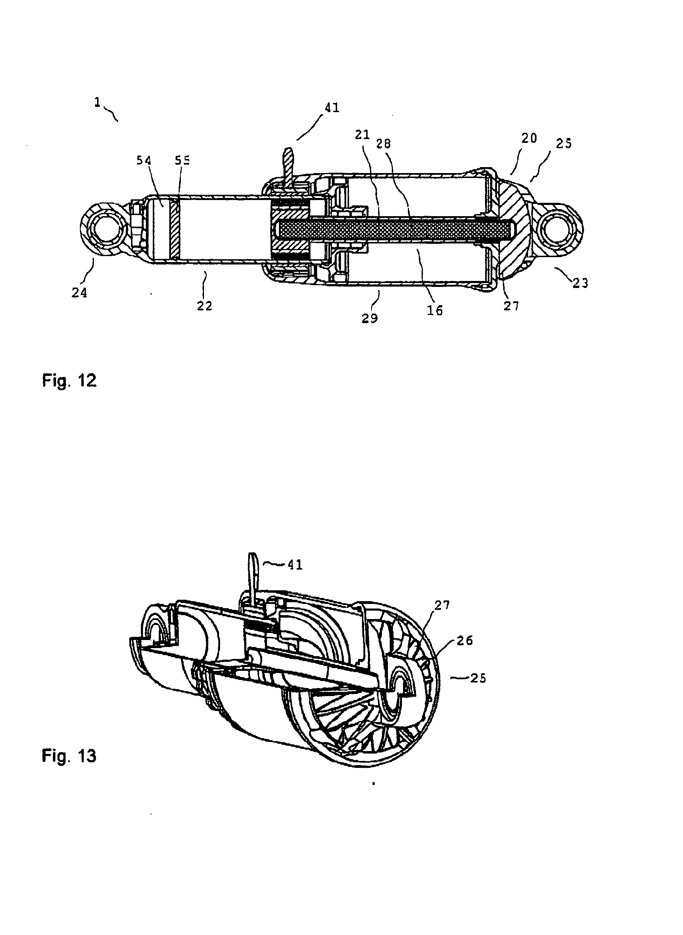

Ein drittes Ausführungsbeispiel ist in den Fig. 12 und 13 dargestellt, wobei sich die Dämpfungseinrichtung 1 wieder zwischen dem ersten Ende 23 und dem zweiten Ende 24 erstreckt und einen Dämpfer 22 und eine als Gasfeder ausgeführte Federeinrichtung 29 umfasst.

Die Einstellung der Dämpfungseigenschaften erfolgt bei diesem Ausführungsbeispiel genauso wie bei dem vorangegangenen Ausführungsbeispiel gemäß der Fig. 6 bis 11.

Im Unterschied zu dem vorausgegangenen Ausführungsbeispiel ist in diesem Beispiel gemäß den Fig. 12 und 13 in dem Inneren der Kolbenstange 16 eine Heatpipe mit einem Wärmerohr 21 angeordnet. Die Heatpipeeinrichtung nimmt an dem am Dämpfungskolben 18 vorgesehenen Ende die bei der Dämpfung entstehende Wärme auf und transportiert die Wärme mit einem sehr geringen Temperaturgradienten von etwa 2 oder 3 Kelvin die aufgenommene Wärme zum Ende 23 der Dämpfereinrichtung 1 ab, wo die aufgenommene Wärme über die Kühlrippen 26 der Konvektionseinheit 27 der Kühleinrichtung 25 abgegeben wird. Fig. 13 zeigt eine perspektivische Ansicht auf das Ende 23 in der die Konvektionseinheit 27 mit den Kühlrippen 26 der Kühleinrichtung 25 deutlich erkennbar ist.

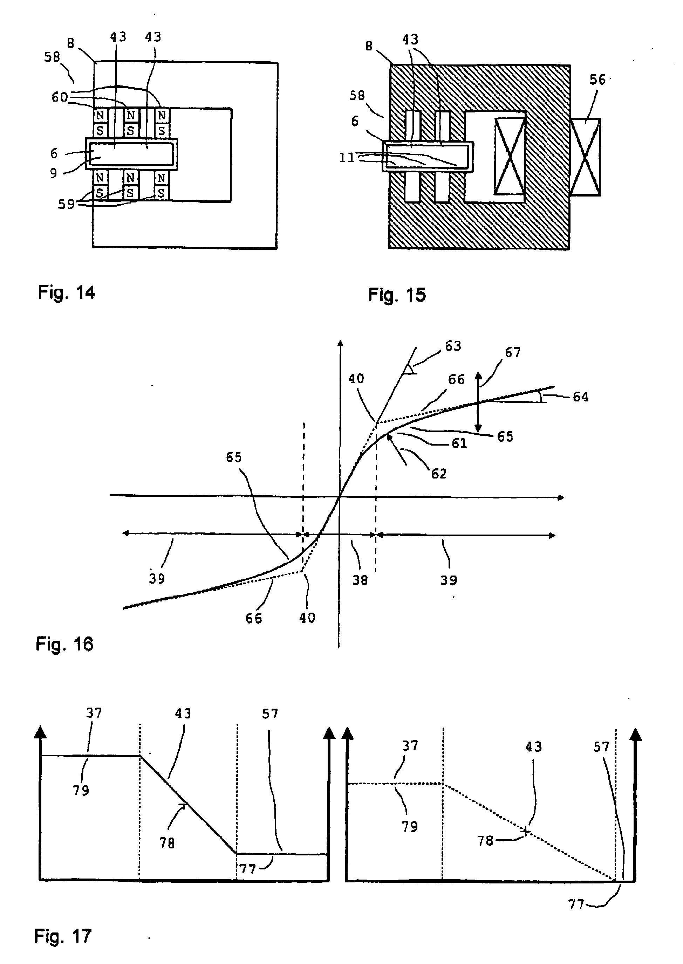

In Fig. 14 ist eine schematische Ansicht einer Magneteinrichtung 8 dargestellt, die hier als Dauermagnet ausgeführt ist. Der Dauermagnet umfasst eine Kammstruktur 59 mit mehreren Polen aus Dauermagneten, den Zinken 59 und 60, die axial von Luftspalten oder anderen nicht magnetischen Bereichen getrennt sind. Zwischen den sich jeweils gegenüberliegenden Zinken 59 und 60 ist der Dämpfungskanal 6 vorgesehen, der so von mehreren magnetischen Teilfeldern durchquert wird. Jedes sich gegenüberliegende Zinkenpaar 59 und 60 erzeugt einen Anteil 11 der Querschnittsfläche bzw. Wirkabschnitt 37, in dem das volle Magnetfeld wirkt. Dazwischen ist jeweils ein Übergangsbereich 43, der nur einem Teilfeld ausgesetzt ist.

Je nach Ausbildung der Magneteinrichtung und/oder der Feldstärken kann sich - in der Orientierung der Figur 14 horizontal gesehen - der zwischen zwei Zinken liegende Bereich auch in einen Übergangsbereich 43, einen Bypass-Abschnitt 57 ohne Feld und wieder in einen Übergangsbereich 43 unterteilen. Wenn gewünscht kann auch - wieder z.B. von links nach rechts gesehen - zwischen dem ersten und zweiten Zinken nur ein Übergangsbereich 43 sein, während zwischen dem Zinken 2 und 3 ein dazwischenliegender Bypass-Abschnitt 57 ohne Feld ist.

Die Übergangsbereiche 43 führen zu einer Abrundung der Dämpferkennlinie am Übergang von dem Low-Speed zu dem High-Speed-Bereich und die Bypass-Abschnitte 57 zu einem Nulldurchgang im Kraft-Geschwindigkeitsdiagramm.

In Fig. 15 ist eine Magneteinrichtung 8 mit einer Kammstruktur bzw. einem Kammabschnitt 58 schematisch dargestellt, wobei eine elektrische Spule 56 zur Erzeugung des Magnetfeldes dient. Hier werden alle Zinken 59 gleichzeitig dem Magnetfeld der elektrischen Spule 56 ausgesetzt, sodass wieder mehrere Übergangsbereiche 43 und, wenn gewünscht, Bypass-Abschnitte 57 entstehen. Gegebenenfalls können auch mehrere elektrische Einzelspulen 56 vorgesehen sein, beispielsweise an jedem Zinken, um die Magnetfelder zwischen den einzelnen Zinkenpaaren 59 und 60 einzeln beeinflussen zu können.

Jedenfalls kann mit der Kammstruktur bzw. mit mehreren Polpaaren der Übergangsbereich 43 erheblich verändert und vergrößert bzw. verkleinert werden.

Durch den Übergangsbereich 43 oder die mehreren Übergangsbereiche wird ein Dämpfer zur Verfügung gestellt, der einen weichen Übergang der Dämpferkennlinie von geringen zu starken Belastungen erlaubt. Die Dämpferkennlinie hat einen Nulldurchgang im Kraft-Geschwindigkeitsdiagramm. Der Radius des Übergangs vom Low-Speed-Bereich zum High-Speed-Bereich ist über die Größe des Übergangsbereichs 43 einstellbar.

Eine Dämpferkennlinie 65 des erfindungsgemäßen Dämpfers ist in Fig. 16 in einem Kraft-Geschwindigkeitsdiagramm des Dämpferkolbens dargestellt. Der Low-Speed-Bereich 38 und der High-Speed-Bereich 39 sind über eine sanfte Abrundung 61 mit einem Radius 62 verbunden. Im Low-Speed-Bereich 38 wird die Steigung 63 der Dämpferkennlinie im Wesentlichen durch den Bypass-Absehnitt 57 bestimmt. Im High-Speedbereich 39 bzw. in den High-Speed-Bereichen 39 für die Zug- und Druckstufe wird die Steigung 64 wesentlich durch den Wirkabschnitt 37 des Dämpferkanals 6 mitbestimmt, wo das volle Magnetfeld wirkt.

Der Übergangsbereich 43, in welchem über seiner Ausdehnung ein schwächer werdendes Magnetfeld wirkt, bewirkt die vorteilhafte nicht-lineare Ausprägung mit der Abrundung 61, die erst zu einer angenehmen und sicheren Betriebsweise führt.

Eingezeichnet ist weiterhin ein Pfeil 67, der die Auswirkung eines unterschiedlich starken Magnetfeldes anzeigt. Mit einem stärkeren Magnetfeld verschiebt sich die Kennlinie nach oben, während sie bei einem schwächeren Magnetfeld sich nach unten verschiebt.

Gestrichelt eingezeichnet ist eine Dämpferkennlinie 66, die ohne Übergangsbereich 43 vorliegen würde, wenn neben dem magnetorheologischen Dämpfungskanal 6 noch ein zusätzlicher Bypass-Kanal vorgesehen wäre. An dem Knickpunkt 40 würde bei einem solchen Dämpfer der Widerstand im Dämpfungskanal überwunden und sich die Dämpfung schlagartig ändern, was zu unerwünschten Fahreigenschaften eines Fahrrades führen könnte. Die Steigung im Low-Speed-Bereich 38 ist durch den Flächenanteil des Bypass-Abschnittes 57 einstellbar. Je größer der Bypass-Abschnitt 57, desto kleiner die Steigung. Auch der Nulldurchgang wird durch den Bypass-Abschnitt 57 erzeugt, da durch den Bypass-Abschnitt 57 jederzeit Dämpfungsfluid unbeeinflusst fließen kann, sodass schon bei kleinen Kräften eine entsprechende Dämpferkolbenbewegung ausgelöst wird.

Die Steigung im High-Speed-Bereich 39 wird durch den wirkabschnitt 37 und das magnetische Feld beeinflusst.

Der für die Komfortabilität und die Sicherheit wichtige Bereich mit der Abrundung 61 dazwischen wird durch Übergangsbereich 43 des Dämpfungskanals abgerundet, sodass eine ergonomische und sichere Betriebsweise ermöglicht wird. Die Größe des abgerundeten Bereichs ergibt sich aus der Größe und Gestalt des Übergangsbereichs 43.

Das Feld in dem Übergangsbereich 43 ist stark inhomogen, sodass das Verhältnis von größtem Feldwert zu kleinstem Feldwert innerhalb des Übergangsbereichs 43 größer als zehn und vorzugsweise größer als einhundert ist.

Fig. 17 zeigt schematisch zwei Verläufe der Feldstärke über dem Querschnitt des Strömungskanals 6. In der linken Hälfte ist der Verlauf der Feldstärke stark schematisch in einer ersten Einstellung dargestellt.

Im Bypass-Abschnitt 57 liegt ein etwa homogenes Feld vor, welches einen ersten Durchschnittswert 77 aufweist. In dem Übergangsbereich 43 ist das Feld stark inhomogen und weist einen starken Gradienten auf. Das Feld weist in dem Übergangsbereich 43 einen erheblich größeren zweiten Durchschnittswert 78 auf. Der Verlauf der Feldstärke über den wirkabschnitt 37 ist etwa gleichbleibend hoch und weist einen dritten Durchschnittswert 79 auf. Der Flächenanteil des wirkabachnitts 37 beträgt hier etwa ein Drittel, genauso wie auch der Flächenanteil des Übergangsbereichs 43 und der des Bypass-fibschnitts 57. Der jeweilige Flächenanteil und das dort jeweils herrschende Feld hängen von den jeweils aktuellen Einstellbedingungen ab. Insbesondere können auch in dem Wirkabschnitt 37 und in dem Bypass-Abschnitt 57 räumliche und/oder zeitliche Schwankungen der Feldstärke vorliegen.

In der rechten Hälfte von Fig. 17 ist der Verlauf des Feldes über dem Querschnitt des Dämpfungskanals mit anderen Einstellungen dargestellt. Dort ist der Flächenanteil des Wirkabschnitts 37 wieder etwa ein Drittel. Der Übergangsbereich 43 ist erheblich größer und der Bypass-Abschnitt entsprechend kleiner. Die Durchschnittswerte 77, 78 und 79 sind entsprechend angepasst, wobei sich der dritte Durchschnittswert 79 nicht verändert haben muss. Diese Darstellung zeigt, dass das Feld über dem Dämpfungskanal stark inhomogen ist. Die Größe jedes Bestandteils bzw. Abschnittes kann einstellbar sein, sodass die Dämpfungseigenschaften einfach angepasst werden können.

### Bezugszeichenliste:

- 1: Dämpfereinrichtung
- 2, 3: Dämpferkammer
- 4: Strömungsverbindung
- 5: Ventil
- 6: Dämpfungskanal
- 6a: Dämpfungsspalt für die Druckstufe
- 6b: Dämpfungsspalt für die Druckstufe
- 7: Dämpfungskanal
- 7a: Dämpfungsspalt für die Zugstufe
- 7b: Dämpfungsspalt für die Zugstufe
- 8: Magneteinrichtung
- 8a, 8b: Dauermagnet
- 8c, 8d: nicht magnetisches Winkelsegment
- 9: magnetorheologisches Fluid
- 10: Einstelleinrichtung
- 11: Anteil, Flächenanteil, Volumenanteil
- 12: Einstellelement
- 13: Dreheinrichtung
- 14: Dreheinheit für die Zugstufe
- 15: Dreheinheit für die Druckstufe
- 16: Kolbenstange
- 17: Außenseite
- 18: Dämpfungskolben
- 19a, 19b: Steuerstange
- 20: Heatpipeeinrichtung
- 21: Wärmerohr
- 22: Dämpfer
- 23: erstes Ende
- 24: zweites Ende
- 25: Kühleinrichtung
- 26: Kühlrippe
- 27: Konvektionseinheit
- 28: Rückflusseinrichtung
- 29: Federeinrichtung
- 30: Gasfeder
- 31, 32: Federkammer
- 33: erste Position
- 34: zweiten Position
- 35: dritte Position
- 36: vierte Position
- 37: Wirkabschnitt
- 38: Low-Speed-Bereich
- 39: High-Speed-Bereich
- 40: Knickpunkt
- 41: Bedienhebel
- 42: Kern
- 43: Übergangsbereich
- 44: Magnetfeld
- 45: Dämpfergehäuse
- 46: Fächerelement
- 47-49: magnetischer Leiter
- 50: Zusatzfeder
- 51: Kolbenring
- 52: Einwegventil
- 53: Einwegventil
- 54: Ausgleichsfeder
- 55: Trennkolben
- 56: elektrische Spule
- 57: Bypass-Abschnitt
- 58: Kammabschnitt, Kammstruktur
- 59, 60: Zinken
- 61: Abrundung
- 62: Radius
- 63, 64: Steigung
- 65, 66: Dämpferkennlinie
- 67: Pfeil
- 68: Kolben
- 77: erster Durchschnittswert
- 78: zweiter Durchschnittswert
- 79: dritter Durchschnittswert

## Patentansprüche

1. Dämpfereinrichtung (1) für ein Zweirad mit wenigstens einer ersten Dämpferkammer (2) und wenigstens einer zweiten Dämpferkamner (3), welche über wenigstens ein Ventil (5) mit wenigstens einem Dämpfungskanal (6, 7) miteinander gekoppelt sind, sowie mit einer Felderzeugungseinrichtung (8), wobei in dem Dämpfungskanal (6, 7) ein durch ein Feld beeinflussbares Fluid (9) vorgesehen ist und die Felderzeugungseinrichtung (8) dafür vorgesehen ist mit einem Feld (44) auf das durch ein Feld beeinflussbare Fluid (9) in dem Dämpfungskanal (6, 7) einzuwirken,
wobei wenigstens eine Einstelleinrichtung (10) vorgesehen ist, mit welcher das in dem Dämpfungskanal (6, 7) wirkende Feld (44) einstellbar ist,
**dadurch gekennzeichnet,**
**dass** mit der Einstelleinrichtung (10) wenigstens ein Anteil (11) des Querschnittes des Dämpfungskanals (6, 7) einstellbar ist, der einem Feld (44) bestimmter Stärke ausgesetzt ist, sodass der Querschnitt des Dämpfungskanals (6, 7) auch nur teilweise einem Feld (44) bestimmter Stärke aussetzbar ist.

2. Dämpfereinrichtung (1) nach Anspruch 1, wobei mit der Einstelleinrichtung (10) der Flächenanteil (11) des Querschnittes des Dämpfungskanals (6, 7) einstellbar ist, auf welchen ein Feld (44) bestimmter Stärke einwirkt.

3. Dämpfereinrichtung (1) nach Anspruch 1 oder 2, wobei mit der Einstelleinrichtung der Volumenanteil (11) des Dämpfungskanals (6, 7) einstellbar ist, auf welchen ein Feld (44) bestimmter Stärke einwirkt.

4. Dämpfereinrichtung (1) nach mindestens einem der vorhergehenden Ansprüche, wobei der Dämpfungskanal (6, 7) wenigstens einen dem Feld ausgesetzten Wirkabschnitt (37) und/oder einen dem Feld gar nicht oder nur sehr gering ausgesetzten Bypass-Abschnitt (57) umfasst, wobei wenigstens ein Übergangsbereich (43) an den Wirkabschnitt (37) und/oder Bypass-Abschnitt (57) angrenzt, wobei wenigstens der übergangsbereich (43) vorzugsweise einstellbar ist.

5. Dämpfereinrichtung (1) nach mindestens einem der vorhergehenden Ansprüche, wobei die Felderzeugungseinrichtung eine Magneteinrichtung umfasst, um ein magnetisches Feld als Feld zu erzeugen und wobei das durch ein Feld beeinflussbare Fluid (9) ein magnetorheologisches Fluid (9) umfasst.

6. Dämpfereinrichtung (1) nach mindestens einem der vorhergehenden Ansprüche, wobei die Magneteinrichtung (8) wenigstens einen Dauermagneten (8, 8a, 8b) umfasst.

7. Dämpfereinrichtung (1) nach mindestens einem der vorhergehenden Ansprüche, wobei die Einstelleinrichtung (10) wenigstens ein längsverschiebliches Einstellelement (12) und/oder wenigstens eine Dreheinrichtung (13) umfasst.

8. Dämpfereinrichtung (1) nach mindestens einem der vorhergehenden Ansprüche, wobei die Dreheinrichtung (13) eine Dreheinheit (14) zur Einstellung wenigstens eines Dämpfungskanals (6) für die Zugstufe und/oder eine Dreheinheit (15) zur Einstellung wenigstens eines Dämpfungskanals (7) für die Druckstufe umfasst, welche insbesondere koaxial ausgebildet sind.

9. Dämpfereinrichtung (1) nach mindestens einem der vorhergehenden Ansprüche, wobei wenigstens eine Dreheinheit (14, 15) auf der Außenseite (17) einer Dämpferkammer (6, 7) vorgesehen ist.

10. Dämpfereinrichtung (1) nach mindestens einem der vorhergehenden Ansprüche, wobei wenigstens ein Steuerventil (52, 53) vorgesehen ist.

11. Dämpfereinrichtung (1) nach mindestens einem der vorhergehenden Ansprüche, wobei die Einstellung der Dämpfung ohne direkten mechanischen Kontakt nur über das Magnetfeld erfolgt, wobei insbesondere das Magnetfeld (44) durch das Dämpfergehäuse (45) hindurch wirkt.

12. Dämpfereinrichtung (1) nach mindestens einem der vorhergehenden Ansprüche, wobei der Anteil (11) des Dämpfungskanals (6, 7), der keinem Feld ausgesetzt ist und somit als Bypass-Abschnitt wirkt, über eine Einstelleinrichtung (10) veränderbar ist und/oder wobei der Anteil (11) des Dämpfungskanals (6, 7), der einem teilweisen Feld, d.h. dem Übergangsbereich vom schwächsten zum stärksten Bereich des Magnetfeldes (44), ausgesetzt ist, veränderbar ist..

13. Dämpfereinrichtung (1) nach mindestens einem der vorhergehenden Ansprüche, wobei durch mehrere Polpaare (59, 60) der Magneteinrichtung (8) mehrere Übergangsbereiche im Dämpfungskanal (6, 7) erzeugt werden können.

14. Dämpfereinrichtung (1) nach mindestens einem der vorhergehenden Anspruch, wobei das Magnetfeld (44) von einer stromdurchflcssenen Spule (56) erzeugt wird.

15. Dämpfereinrichtung (1) nach mindestens einem der vorhergehenden Ansprüche, wobei die Abdichtung des Dämpferkolbens zur Gehäusewand mittels Dauermagneten erfolgt.

## Claims

1. A damping device (1) for a two-wheeled vehicle having at least one first damper chamber (2) and at least one second damper chamber (3) which are coupled to one another through at least one valve (5) having at least one damping channel (6, 7), and having a field generating device (8), wherein in the damping channel (6, 7) a fluid (9) influenced by a field is provided and the field generating device (8) is provided to be effective by means of a field (44) on the fluid (9) in the damping channel (6, 7) that is influenced through a field, wherein at least one adjusting device (10) is provided with which to adjust the field (44) effective in the damping channel (6, 7), **characterized in that** by means of the adjusting device (10) at least a portion (11) of the damping channel (6, 7) is adjustable that is exposed to a field (44) of a specific strength such that the damping channel (6, 7) can be exposed to a field (44) of a specific strength in part only.

2. The damping device (1) according to claim 1 wherein the area portion (11) of the damping channel (6, 7) on which a field (44) of a specific strength is effective, is adjustable by means of the adjusting device (10).

3. The damping device (1) according to claim 1 or 2 wherein the volume portion (11) of the damping channel (6, 7) on which a field (44) of a specific strength is effective, is adjustable by means of the adjusting device.

4. The damping device (1) according to at least one of the preceding claims wherein the damping channel (6, 7) comprises at least one effective section (37) that is exposed to the field and/or a bypass section (57) that is not at all or hardly at all exposed to the field wherein at least one transition area (43) is adjacent to the effective section (37) and/or bypass section (57).

5. The damping device (1) according to at least one of the preceding claims wherein the field generating device comprises a magnetic device for generating a magnetic field as a field and wherein the fluid (9) influenced by a field comprises a magneto-rheological fluid (9).

6. The damping device (1) according to at least one of the preceding claims wherein the magnetic device (8) comprises at least one permanent magnet (8, 8a, 8b).

7. The damping device (1) according to at least one of the preceding claims wherein the adjusting device (10) comprises at least one longitudinally displaceable adjusting member (12) and/or at least one rotary device (13).

8. The damping device (1) according to at least one of the preceding claims wherein the rotary device (13) comprises a rotary unit (14) for adjusting at least one damping channel (6) for the rebound stage and/or a rotary unit (15) for adjusting at least one damping channel (7) for the compression stage, which are in particular configured coaxially.

9. The damping device (1) according to at least one of the preceding claims wherein at least one rotary unit (14, 15) is provided on the exterior (17) of a damper chamber (6, 7).

10. The damping device (1) according to at least one of the preceding claims wherein at least one control valve (52, 53) is provided.

11. The damping device (1) according to at least one of the preceding claims wherein adjustment of the damping level occurs without immediate mechanical contact through the magnetic field only, wherein in particular the magnetic field (44) is effective passing through the damper body (45).

12. The damping device (1) according to at least one of the preceding claims wherein the portion (11) of the damping channel (6, 7) not exposed to any field thus being effective as a bypass section, can be changed via an adjusting device (10) and/or wherein the portion (11) of the damping channel (6, 7) that is exposed to a partial filed i.e. the transition area from the weakest to the strongest area of the magnetic field (44), can be changed.

13. The damping device (1) according to at least one of the preceding claims wherein multiple transition areas in the damping channel (6, 7) can be generated by multiple pole pairs (59, 60) of the magnetic device (8).

14. The damping device (1) according to at least one of the preceding claims wherein the magnetic field (44) is generated by a current-carrying coil (56).

15. The damping device (1) according to at least one of the preceding claims wherein sealing of the damper piston relative to the housing wall occurs by means of permanent magnets.

## Revendications

1. Dispositif d'amortissement (1) pour un deux roues comprenant au moins une première chambre d'amortisseur (2) et au moins une deuxième chambre d'amortisseur (3), ces deux chambres étant raccordées l'une à l'autre par au moins une vanne (5) à au moins un canal d'amortissement (6, 7), ainsi qu'à des moyens de génération de champ (8), un fluide (9), pouvant être soumis à l'influence d'un champ, étant prévu dans le canal d'amortissement (6, 7) et les moyens de génération de champ (8) étant prévus pour agir au moyen d'un champ (44) sur un fluide pouvant être soumis à l'influence d'un champ dans le canal d'amortissement (6, 7),
au moins un dispositif de réglage (10) étant prévu, au moyen duquel le champ (44) agissant dans le canal d'amortissement (6, 7) est ajustable,
**caractérisé en ce**
**qu'**au moyen du dispositif de réglage (10), est ajustable au moins une partie (11) de la section du canal d'amortissement (6, 7) qui est soumise à un champ (44) d'une certaine force, de telle sorte que la section du canal d'amortissement (6, 7) peut n'être aussi soumise que partiellement à un champ (44) d'une certaine force.

2. Dispositif d'amortissement (1) selon la revendication 1, étant ajustable, à l'aide du dispositif de réglage, la partie surfacique (11) de la section du canal d'amortissement (6, 7) sur laquelle agit un champ (44) d'une certaine force.

3. Dispositif d'amortissement (1) selon la revendication 1 ou 2, étant ajustable, à l'aide du dispositif de réglage, la partie volumique (11) de la section du canal d'amortissement (6, 7) sur laquelle agit un champ (44) d'une certaine force.

4. Dispositif d'amortissement (1) selon au moins l'une quelconque des revendications précédentes, le canal d'amortissement (6, 7) comprenant au moins un tronçon actif (37) soumis au champ et/ou un tronçon de dérivation (57) très peu ou pas du tout soumis au champ, au moins une zone de transition (43) étant adjacente au tronçon actif (37) et/ou au tronçon de dérivation (57), la zone de transition (43) au moins étant de préférence ajustable.

5. Dispositif d'amortissement (1) selon au moins l'une quelconque des revendications précédentes, les moyens de génération de champ comprenant un dispositif magnétique pour générer, comme champ, un champ magnétique, et le fluide (9), pouvant être soumis à l'influence d'un champ, comprenant un fluide magnéto-rhéologique (9).

6. Dispositif d'amortissement (1) selon au moins l'une quelconque des revendications précédentes, le dispositif magnétique (8) comprenant au moins un aimant permanent (8, 8a, 8b) .

7. Dispositif d'amortissement (1) selon au moins l'une quelconque des revendications précédentes, le dispositif de réglage (10) comprenant au moins un élément de réglage (12) modulable en longueur et/ou au moins un dispositif rotatif (13) .

8. Dispositif d'amortissement 1) selon au moins l'une quelconque des revendications précédentes, le dispositif rotatif (13) comprenant une unité rotative (14) pour le réglage d'au moins un canal d'amortissement (6) pour l'action d'extension et/ou une unité rotative (15) pour le réglage d'au moins un canal d'amortissement (7) pour l'action de compression, ces unités étant notamment coaxiales.

9. Dispositif d'amortissement (1) selon au moins l'une quelconque des revendications précédentes, au moins une unité rotative (14, 15) étant prévue sur la face extérieure (17) d'une chambre d'amortisseur (6, 7).

10. Dispositif d'amortissement (1) selon au moins l'une quelconque des revendications précédentes, au moins une vanne de régulation (52, 53) étant prévue.

11. Dispositif d'amortissement (1) selon au moins l'une quelconque des revendications précédentes, le réglage de l'amortissement s'effectuant exclusivement au moyen du champ magnétique, sans contact mécanique direct, le champ magnétique (44) notamment agissant à travers le boîtier d'amortisseur (45).

12. Dispositif d'amortissement (1) selon au moins l'une quelconque des revendications précédentes, la partie (11) du canal d'amortissement (6, 7) qui n'est pas soumise à un champ et ayant donc la fonction d'un tronçon de dérivation, étant modifiable au moyen d'un dispositif de réglage (10), et/ou la partie (11) du canal d'amortissement (6, 7) qui est soumise à un champ partiel, c'est-à-dire à la zone de transition entre la zone d'action la plus faible et la zone d'action la plus forte du champ magnétique (44), est modifiable.

13. Dispositif d'amortissement (1) selon au moins l'une quelconque des revendications précédentes, plusieurs couples de pôles (59, 60) du dispositif magnétique permettant de générer plusieurs zones de transition dans le canal d'amortissement (6, 7).

14. Dispositif d'amortissement (1) selon au moins l'une quelconque des revendications précédentes, le champ magnétique (44) étant généré par une bobine (56) parcourue par du courant électrique.

15. Dispositif d'amortissement (1) selon au moins l'une quelconque des revendications précédentes, l'étanchéification du piston d'amortisseur avec la paroi du boîtier s'effectuant au moyen d'un aimant permanent.
